# EUROPÄISCHE PATENTANMELDUNG

(11) **EP 4 838 171 A1**
(43) Veröffentlichungstag der Anmeldung: **11.11.2026**
(21) Anmeldenummer: 25175480.0
(22) Anmeldetag: 09.05.2025
(51) Int. Cl.: G01B 11/06, G01N 21/3581

(54) **MESSVORRICHTUNG UND MESSVERFAHREN ZUM MESSEN MITTELS THZ-STRAHLUNG EINES PARAMETERS EINES LÄNGLICHEN GEGENSTANDS UND PRODUKTIONSANLAGE FÜR WÄRMEGEDÄMMTE LEITUNGSROHRE**

(71) Anmelder: Brugg Rohr AG Holding, 5200 Brugg (CH); Fraunhofer Gesellschaft zur Förderung der angewandten Forschung e.V., 80686 München (DE)
(72) Erfinder: Friederich, Fabian, 67346 Speyer (DE); Hussung, Raphael, 67655 Kaiserlautern (DE); Gantenbein, Rodrigo, 5443 Niederrohrdorf (CH)
(74) Vertreter: E. Blum & Co. AG

(57) **Zusammenfassung**

Die Erfindung betrifft eine Messvorrichtung (1) zum Messen mittels THz-Strahlung eines Parameters eines länglichen Gegenstands (2) mit einem Gehäuse (1a) mit einer Durchgangsöffnung (1b) zum Durchschieben des Gegenstands durch die Messvorrichtung, einer ringförmigen Trageinheit (3) mit einer ersten Ringschiene (3a), einer auf der ersten Ringschiene verfahrbaren Messeinheit (4) umfassend einen Sensorkopf mit einem Sender und einem Empfänger von THz-Signalen, einer Antrieb seinheit (5) zum Drehen der Messeinheit auf der ersten Ringschiene um den Gegenstand, einer Steuerung zum Ansteuern der Antriebseinheit und der Messeinheit, einer mit der Messeinheit verbundenen Datenübertragungseinheit (9), einer mit der Datenübertragungseinheit gekoppelten Recheneinheit zum Verarbeiten von Messdaten von der Datenübertragungseinheit und zum Ausgeben des Parameters als Messergebnis, und einer Stromversorgungseinheit (6) zum Versorgen der Messeinheit, der Antriebseinheit, der Steuerung, der Datenübertragungseinheit und der Recheneinheit mit Strom. Weiter betrifft die Erfindung ein Messverfahren für die Messvorrichtung. Schliesslich betrifft die Erfindung eine Produktionsanlage (20) für ein wärmegedämmtes Leitungsrohr mit einem Innenrohr (2a; 2b) und einer umgebenden Isolationsschicht (2c). Die Produktionsanlage umfasst eine Abwicklungsstation (21) zum Abwickeln des mindestens einen Innenrohrs von einem Vorratswickel, eine Folienstation (22) zur Bildung eines Folienschlauchs um das Innenrohr herum und zur Einbringung einer Isolation, Formbacken (23) zum Einbringen einer Tiefenwellung in die ausgehärtete Isolationsschicht und mit einer Messvorrichtung (1) welche in Produktionsrichtung gesehen entweder vor oder nach den Formbacken angeordnet ist.

## Beschreibung

### Gebiet der Erfindung

Die Erfindung betrifft eine Messvorrichtung zum kontinuierlichen oder abschnittsweisen Messen mittels elektromagnetischer Strahlung im Terahertzbereich mindestens eines Parameters oder eines vom Parameter abgeleiteten Wertes eines länglichen Gegenstands, ein Messverfahren und eine Produktionsanlage für eine wärmegedämmte Leitung als länglicher Gegenstand gemäss dem jeweiligen unabhängigen Anspruch.

### Hintergrund

Wärmegedämmte Leitungsrohre sind bekannt und werden in einer Vielzahl von Ausführungen zum Beispiel im Bereich der Fernwärme genutzt. Typischerweise umfasst ein solches Leitungsrohr ein oder mehrere Innenrohre für das zu transportierende Medium, z.B. heisses Wasser, ein schützendes Aussenrohr und zwischen diesen eine Isolationsschicht aus einem meist geschäumten Isolationsmaterial. Dabei spielt die Isolation eine zentrale Rolle bei solchen Leitungsrohren. Beschädigungen in der Isolationsschicht können zu unerwünschten Temperaturgradienten führen, so dass die zu transportierende Wärme teilweise entweichen kann. Ausserdem sind hohe Anforderungen an die Positionsgenauigkeit (bezogen auf die Längsachse des Leitungsrohrs) der Innenrohre in der Isolationsschicht gestellt. Wenn beispielsweise ein Innenrohr vorgesehen ist, muss sichergestellt werden, dass die Längsachse des Innenrohrs entlang dem hergestellten Leitungsrohrabschnitt so exakt wie möglich mit der Längsachse des Leitungsrohrs zusammenfällt, was aufgrund der grossen Länge eines solchen Abschnitts bzw. der kontinuierlichen Herstellung keine leichte Aufgabe ist. Abweichungen führen dazu, dass im betreffenden Bereich die Isolationsschicht auf einer Seite dünner ist und somit u.U. keine genügende Isolation bietet, was zu Wärmeverlust führt. Weiter kann dadurch, wenn auch in geringem Masse, die strukturelle Integrität des Leitungsrohrabschnitts kompromittiert sein, was angesichts des Betriebs eines solchen Leitungsrohrs im Erdreich, wo hohe Kräfte auf das Leitungsrohr einwirken können, langfristig zu Beschädigungen oder gar zu Rohrbruch führen kann. Bei mehreren Innenrohren ist die Situation ähnlich. Schliesslich kann die Montage von Fittings, die für bestimmte Anordnungsmasse konzipiert sind, beim Leitungsrohr problematisch oder verhindert sein.

Aus diesen Gründen kommt der Qualitätskontrolle bei der Herstellung von wärmegedämmten Leitungsrohren eine besondere Bedeutung zu. Um festzustellen, ob ein Leitungsrohr innerhalb der zulässigen Toleranzen hergestellt wurde, hat man in regelmässigen Abständen ein Stück vom Leitungsrohr abgeschnitten und manuell gemessen, ob die Abstände korrekt sind. Diese Methode ist zeitaufwändig und kostenintensiv. Alternative, nicht zerstörerische Methoden mit Anwendung von Röntgenstrahlung sind auch problematisch, da diese Strahlung ionisierend ist und Sicherheitsprobleme mit sich bringt. Um ionisierende Strahlung zu vermeiden können alternativ Mikrowellen verwendet werden. Jedoch haben diese den Nachteil der vergleichsweisen kleineren örtlichen Auflösung. Dies gilt nicht nur für wärmegedämmte Leitungsrohre, sondern für Gegenstände aller Art, deren Innenleben auf zerstörungsfreie Weise untersucht werden soll.

### Darstellung der Erfindung

Die Erfindung hat die Aufgabe, eine Lösung bereitzustellen, die eine Untersuchung länglicher Objekte, insbesondere wärmegedämmter Leitungsrohre, ohne die Nachteile des Stands der Technik ermöglicht.

Die Aufgabe wird erfindungsgemäss **in einem ersten Aspekt** mit einer Messvorrichtung zum kontinuierlichen oder abschnittsweisen Messen mittels elektromagnetischer Strahlung im Terahertzbereich mindestens eines örtlichen oder stofflichen Parameters oder eines vom Parameter abgeleiteten örtlichen oder stofflichen Wertes eines länglichen Gegenstands mit einer Längsachse, gelöst. Die Messvorrichtung umfasst ein Gehäuse, eine ringförmige Trageinheit, eine Messeinheit, eine Antriebseinheit, eine Steuerung, eine Datenübertragungseinheit, eine Recheneinheit und eine Stromversorgungseinheit. Im Gehäuse ist eine Durchgangsöffnung mit einer Eingangsseite und einer Ausgangsseite zum Durchschieben des länglichen Gegenstands durch die Messvorrichtung vorgesehen. Die ringförmige Trageinheit hat eine erste Ringschiene, welche um die Längsachse der Durchgangsöffnung angeordnet und zentriert ist. Die Messeinheit ist auf der ersten Ringschiene verfahrbar und umfasst einen Sensorkopf mit einem Sender und einem Empfänger. Der Sender ist zum Senden eines ersten THz-Signals in Richtung des länglichen Gegenstands und der Empfänger ist zum Empfangen eines zweiten, von einem Element des länglichen Gegenstands reflektierten THz-Signals im Sensorkopf so angeordnet und ausgerichtet, dass sie beim Verfahren immer in Richtung des länglichen Gegenstands zeigen. Die Antriebseinheit ist derart ausgestaltet, dass sie die Messeinheit auf der ersten Ringschiene mit einer Soll-Winkelgeschwindigkeit antreibt. Die Steuerung ist zum Ansteuern der Antriebseinheit und der Messeinheit ausgestaltet. Die Datenübertragungseinheit ist mit der Messeinheit verbunden und mit der Recheneinheit gekoppelt. Die Recheneinheit ist derart ausgestaltet, dass sie Messdaten von der Datenübertragungseinheit empfängt, verarbeitet und ein Messergebnis ausgibt, wobei als Messergebnis der mindestens eine Parameter selbst oder der mindestens eine vom Parameter abgeleitete Wert ausgebbar ist. Die Stromversorgungseinheit ist zum Versorgen der Messeinheit, der Antriebseinheit, der Steuerung, der Datenübertragungseinheit und der Recheneinheit mit Strom ausgestaltet.

Die Aufgabe wird erfindungsgemäss **in einem zweiten Aspekt** mit einem Messverfahren zum Betrieb der Messvorrichtung nach dem ersten Aspekt der Erfindung gelöst. Das Messverfahren umfasst die Schritte a): Detektieren des Eintritts des länglichen Gegenstands in die Durchgangsöffnung, b): Beschleunigen der Messeinheit auf die Soll-Winkelgeschwindigkeit mittels der Antriebseinheit, c): Starten eines Messvorgangs mittels der Steuerung sobald die Messeinheit die Soll-Winkelgeschwindigkeit erreicht hat, indem die Messeinheit das erste THz-Signal in Richtung des länglichen Gegenstands kontinuierlich aussendet, d): Drehen der Messeinheit mittels der Antriebseinheit mit der Soll-Winkelgeschwindigkeit während eines Vorschubs des länglichen Gegenstands durch die Durchgangsöffnung, e): Empfangen mittels der Messeinheit des von einem Element des länglichen Gegenstands reflektierten zweiten THz-Signals, f): Mischen des ersten THz-Signals mit dem reflektierten zweiten THz Signal und Übertragen eines so gemischten Signals konsekutiver Messungen des Messvorgangs an die Recheneinheit und g): Berechnen aus dem gemischten Signal ein Laufzeitunterschied zwischen dem ersten und dem zweiten Signal und Herleiten des mindestens einen Parameters selbst und optional des mindestens einen vom Parameter abgeleiteten Werts und Ausgeben des Messergebnisses.

Die Aufgabe wird erfindungsgemäss **in einem dritten Aspekt** mit einer Produktionsanlage für ein wärmegedämmtes Leitungsrohr, als länglicher Gegenstand, mit mindestens einem Innenrohr und einer das mindestens eine Innenrohr umgebende Isolationsschicht. Die Produktionsanlage umfasst nacheinander in Produktionsrichtung eine Abwicklungsstation zum Abwickeln des mindestens einen Innenrohrs von einer Vorratswickel, eine Folienstation zur Bildung eines Folienschlauchs um das mindestens eine Innenrohr herum und zur Einbringung eines schaumbildenden Ausgangsmaterials in den Folienschlauch, welches schaumbildende Material als Isolationsschicht aushärtet, und mindestens zwei Formbacken zum Einbringen einer Tiefenwellung in die ausgehärtete Isolationsschicht. Die Produktionsanlage umfasst weiter eine Messvorrichtung nach dem ersten Aspekt der Erfindung, welche zum Messen des Parameters mit dem Messverfahren nach dem zweiten Aspekt der Erfindung betrieben wird und in Produktionsrichtung gesehen entweder vor oder nach den Formbacken angeordnet ist.

Ein Vorteil der Erfindung ist, dass sie aufgrund der Verwendung von THz-Strahlung eine Untersuchung des Innenlebens eines länglichen Objekts ohne Zerstörung und ohne Ionisierung des Objekts ermöglicht.

Überdies ermöglicht die erfindungsgemässe Messvorrichtung, wenn sie mit dem erfindungsgemässen Messverfahren betrieben wird, eine kontinuierliche Messung, im Falle von wärmegedämmten Leitungsrohren auch während der Produktion. Die Produktion muss nicht unterbrochen werden um Stichproben zu entnehmen und zu untersuchen. Ausserdem müssen keine zusätzlichen, bekanntlich teuren Sicherheitsmassnahmen aufgrund von ionisierender Strahlung implementiert werden, da der direkte Kontakt mit THz-Strahlung für den Menschen ungefährlich ist.

Weiter ist es vorteilhaft, dass eine Untersuchung eines länglichen Gegenstands aufgrund der Drehbarkeit der Messeinheit und weiterer dazu gehörender Komponenten vollumfänglich durchgeführt werden kann, so dass das gesamte Objekt erfasst werden kann.

Da der Bereich der Terahertz (THz)-Strahlung nur in den letzten Jahren durch Bereitstellung geeigneter Sender- und Empfängerstrukturen praktisch relevant wurde, was erst aufgrund der Fortschritte in der Halbleitertechnik und der damit massgeblich vorangetriebenen Entwicklung von kompakten und integrierten THz-Komponenten möglich wurde, konnte nun die vorliegende Anwendung erforscht und in die Praxis umgesetzt werden.

Es hat sich gezeigt, dass die örtliche Auflösung von THz-Strahlung so hoch ist, dass die Anwendung für die Untersuchung von relativ grossen länglichen Objekten, wie z.B. wärmegedämmte Leitungsrohre, möglich wird und bessere Ergebnisse im Vergleich zu Mikrowellen ergeben.

Die vorliegende Erfindung ermöglicht generell die Anwendung im Bereich der Qualitätssicherung in industriellen Prozessen aufgrund der hohen Eindringtiefe in dielektrische Materialien, zum Beispiel einen Einblick in Verpackungen, ohne diese zu öffnen. Es können eine Vielzahl von Parametern solcher Objekte untersucht werden. Diese Fingerprints machen sich durch nahezu diskrete Einbrüche im Spektrum des Terahertz-Pulses bemerkbar. So kann THz-Spektroskopie verwendet werden, um materialcharakteristische Spektrallinien aufzunehmen.

Die vorliegende Erfindung ermöglicht die Schichtdickenbestimmung von dünnen dielektrischen Schichten, was in einer Vielzahl von technischen Gebieten zur Anwendung kommen kann. Mit der vorliegenden Terahertz-Technik ist es generell möglich, die Dicken einzelner Schichten in einem Mehrschichtsystem kontaktlos simultan zu bestimmen. Als Substrat können sowohl leitende (Metall, CFK) als auch dielektrische Materialien (Kunststoffe, GFK, Keramik) verwendet werden. Abhängig von den Materialparametern im Terahertz-Bereich sind minimale Dicken von 10 µm mit einer Genauigkeit von 1 µm messbar.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische Ansicht einer erfindungsgemässen Messvorrichtung,
Fig. 2 eine perspektivische Ansicht einer Baugruppe der erfindungsgemässen Messvorrichtung aus Fig. 1,
Fig. 3 eine seitliche Explosionsansicht der Komponenten der Baugruppe aus Fig. 2,
Fig. 4 eine Frontansicht, von der Eingangsseite aus gesehen, eines Rahmens des Gehäuses der Messvorrichtung aus Fig. 1 mit der Baugruppe aus Fig. 2,
Fig. 5 eine Detailansicht A aus Fig. 4 eines Schlittenelements der Messvorrichtung,
Fig. 6 eine schematische beispielhafte Ansicht des Messweges einer Messeinheit der Messvorrichtung beim Messen einer wärmegedämmten Leitung,
Fig. 7 eine schematische beispielhafte Ansicht eines Signalmaximums im Messbereich der Messvorrichtung bezogen auf die Längsachse als Rotationsmittelpunkt,
Fig. 8 einen beispielhaften Signalverlauf verschiedener Signale der Messung,
Fig. 9 ein Beispiel von Fourier-transformierten Sensordaten die zwei separate Reflektoren im Raum zeigen,
Fig. 10a-10c jeweils ein Darstellungsbeispiel von Messdaten mit Maxima gemäss Fig. 7,
Fig. 11 eine schematische beispielhafte Darstellung der Abstände von Innenröhren einer wärmegedämmten Leitung als Beispiel für einen länglichen Gegenstand, und
Fig. 12 eine erfindungsgemässe Produktionsanlage für ein wärmegedämmtes Leitungsrohr mit einer erfindungsgemässen Messvorrichtung gemäss Fig. 1.

### Weg(e) zur Ausführung der Erfindung

Ein länglicher Gegenstand im Sinne der Erfindung wird als ein Gegenstand verstanden, der einen extrudierten Strang aus zumindest teilweise dielektrischen Materialien darstellt, insbesondere eine wärmeisolierte Rohrleitung für Flüssigkeiten und Gase oder ein kunststoffisoliertes Kabel oder ein durch Extrusion hergestelltes Kunststoffprofil.

Nachfolgend wird die Messvorrichtung anhand eines wärmegedämmten Leitungsrohrs beschrieben. Sie ist aber nicht auf die entsprechende Form und Struktur beschränkt und könnte analog für eine Vielzahl von länglichen Gegenständen verwendet werden. Folglich ist die Verwendung des Begriffs "Leitungsrohr" im gesamten Text nicht als limitierend für längliche Gegenstände zu verstehen. Sämtliche Merkmale der Messvorrichtung und des Messverfahrens sind jedoch für eine Produktionsanlage für wärmegedämmte Leitungsrohre anwendbar.

Der Begriff "verbunden" soll im vorliegenden Zusammenhang als elektrische Verbindung aufgefasst werden, wenn nicht anderes spezifiziert ist.

Der Terahertz-Bereich im elektromagnetischen Spektrum deckt das Band zwischen Mikrowellen und Infrarot-Strahlung ab. Im Kontext der Erfindung handelt es sich beim ersten THz-Signal bevorzugt um ein FMCW-Signal (frequency-modulated continuous-wave signal).

Nachfolgend werden zunächst die strukturellen Merkmale der Messvorrichtung erläutert. Anschliessend wird auf das Messverfahren und auf die Herleitung der gesuchten Parameter aus den THz-Signalen der Messvorrichtung eingegangen. Schliesslich wird eine Produktionsanlage beschrieben, bei der die Messvorrichtung zum Einsatz kommt.

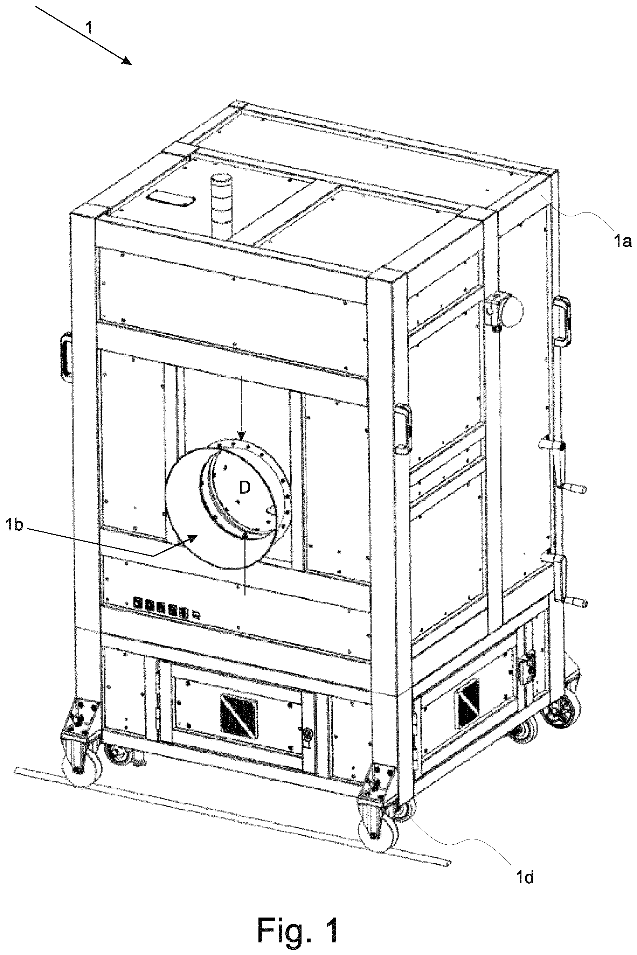

Fig. 1 zeigt eine perspektivische Ansicht einer erfindungsgemässen Messvorrichtung 1 zum kontinuierlichen Messen mittels elektromagnetischer Strahlung im Terahertzbereich mindestens eines Parameters oder eines vom Parameter abgeleiteten Wertes eines länglichen Gegenstands. Die Messvorrichtung hat ein Gehäuse 1a. Im Gehäuse ist eine Durchgangsöffnung 1b mit einem Durchmesser D und mit einer Eingangsseite (die sichtbare Seite in der Figur) und einer Ausgangsseite (die hintere, nicht sichtbare Seite in der Figur) zum Durchschieben des länglichen Gegenstands durch die Messvorrichtung von der Eingangsseite in Richtung des Pfeils 1b. Weiter hat die Vorrichtung eine Benutzerschnittstelle (nicht gezeigt). Mit Vorteil ist das Gehäuse mit Rädern 1d versehen, so dass die Messvorrichtung einfach an die bestimmungsgemässe Position bewegt werden kann. Sobald die Vorrichtung in dieser Position angelangt ist, wird sie bevorzugt mit hier nicht gezeigten Mitteln fixiert, so dass sie im späteren Betrieb in keiner Richtung bewegbar ist, um eine Verfälschung der Messungen und allenfalls eine Beschädigung der Messvorrichtung selbst und/oder des zu messenden Gegenstands zu vermeiden.

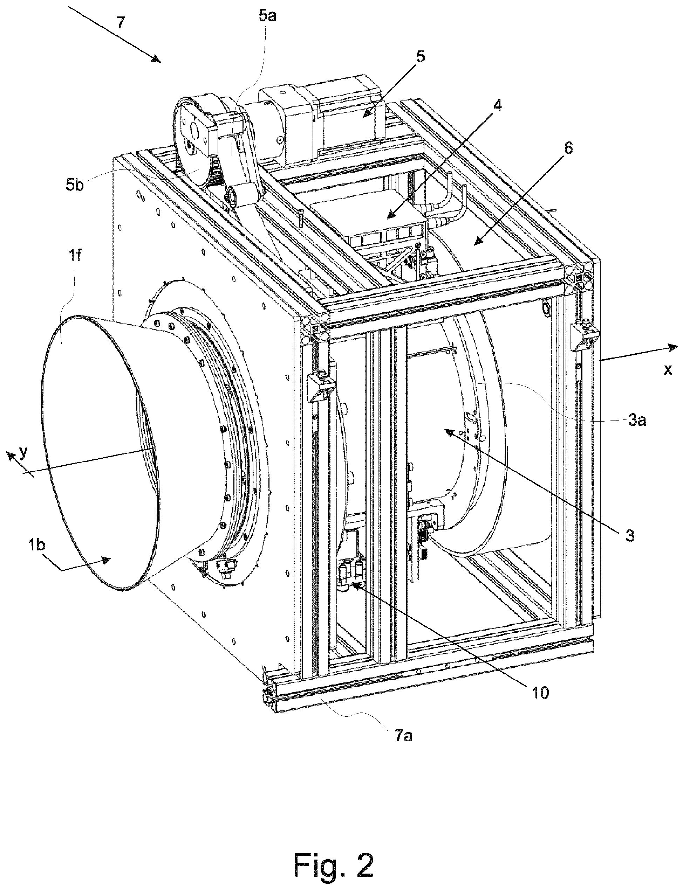

Es ist bevorzugt, wenn das Gehäuse der Messvorrichtung einen Hauptrahmen aufweist, an dem eine nachfolgend im Kontext von Fig. 2 beschriebene Baugruppe 7 befestigt ist. Die Baugruppe ist in dieser Figur aufgrund von Abdeckplatten, die u.a. zum Schutz des Personals vor allfälligen Verletzungen durch rotierende Teile am Hauptrahmen vorgesehen sind, verdeckt.

Fig. 2 zeigt eine perspektivische Ansicht der oben erwähnten Baugruppe 7 der erfindungsgemässen Messvorrichtung aus Fig. 1.

Die Messvorrichtung umfasst weiter eine ringförmige und stationäre, nicht-drehende Trageinheit 3 mit einer ersten Ringschiene 3a, welche um die Längsachse x der Durchgangsöffnung angeordnet und zentriert ist.

Weiter umfasst sie eine auf der ersten Ringschiene verfahrbare Messeinheit 4. Die Messeinheit hat einen Sensorkopf mit einem integrierten Sender und einem integrierten Empfänger, die in dieser Figur aus Übersichtlichkeitsgründen nicht gezeigt sind. Der Sender ist zum Senden eines ersten THz-Signals in Richtung des länglichen Gegenstands, also in radialer Richtung y, angeordnet und ausgerichtet. Der Empfänger ist zum Empfangen eines zweiten, von einem Element oder einer Trennfläche zwischen zwei Elementen des Leitungsrohrs reflektierten THz-Signals angeordnet und ausgerichtet. Der Sender und der Empfänger sind im Sensorkopf also derart angeordnet, dass sie beim Verfahren/Drehen immer in Richtung des länglichen Gegenstands, also in radialer Richtung, zeigen.

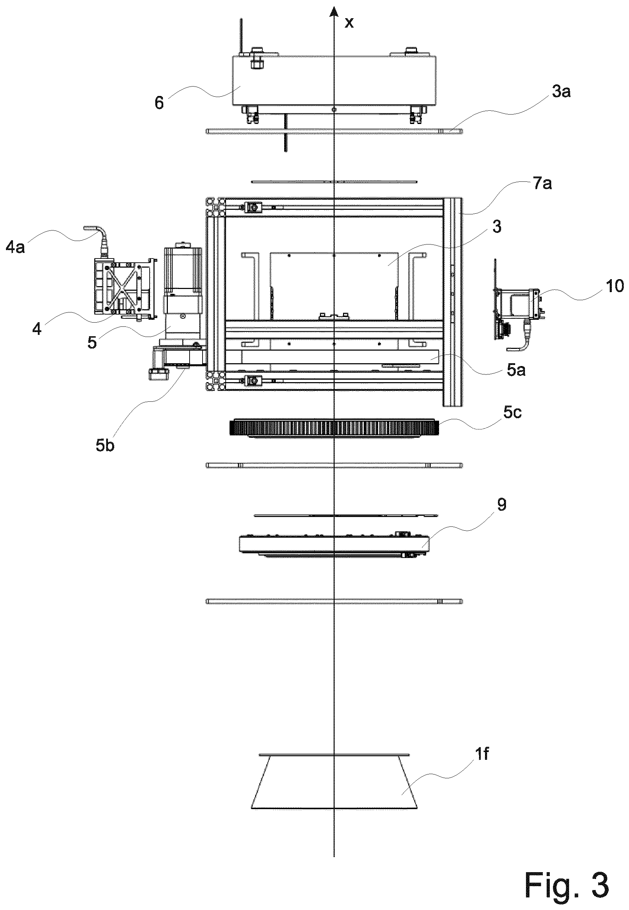

Die Messvorrichtung umfasst weiter eine Antriebseinheit 5. Die Antriebseinheit ist ein variabel ansteuerbarer Motor, um die Messeinheit über einen Riemenantrieb 5a, 5b, 5c (Fig. 3) auf der ersten Ringschiene mit einer Soll-Winkelgeschwindigkeit anzutreiben.

Die Messvorrichtung umfasst weiter eine Steuerung (nicht gezeigt) zum Ansteuern der Antriebseinheit und der Messeinheit.

Die Messvorrichtung umfasst weiter eine mit der Messeinheit verbundene Recheneinheit (nicht gezeigt) mit einer Datenübertragungseinheit. Die Recheneinheit ist derart ausgestaltet, dass sie Messdaten von der Messeinheit empfängt, verarbeitet und ein Messergebnis mittels der Datenübertragungseinheit ausgibt, wobei als Messergebnis der mindestens eine Parameter selbst oder der mindestens eine vom Parameter abgeleitete Wert ausgebbar ist.

Ausserdem umfasst die Messvorrichtung eine Stromversorgungseinheit 6 zum Versorgen der Messeinheit, der Antriebseinheit, der Steuerung und der Recheneinheit mit Strom.

Es ist bevorzugt, wenn die Messvorrichtung weiter einen Lasersensor 10 zum Detektieren des Eintritts des Leitungsrohrs in die Durchgangsöffnung umfasst. Dabei signalisiert der Lasersensor den Eintritt des Leitungsrohrs in die Durchgangsöffnung zum Initiieren einer Messung der Messeinheit an die Steuerung. Weiter kann der Lasersensor auch die Aufgabe übernehmen, das Fehlen der Isolationsschicht zu detektieren und daraufhin eine laufende Messung zu beenden. Selbstverständlich sind alternative geeignete Vorrichtungen wie Lichtschranken, usw. auch verwendbar. Der Lasersensor ist jedoch bevorzugt, da er auch eine weitere Aufgabe übernehmen kann, die im späteren Verlauf der Beschreibung ersichtlich wird.

Die Baugruppe 7 hat einen eigenen Baugruppenrahmen 7a, an welchem mindestens die Messeinheit, die Trageinheit und die Stromversorgung befestigt sind. Mit anderen Worten sind diese Einheiten nicht am Hauptrahmen befestigt so dass die Baugruppe in einem Stück aus dem Gehäuse herausnehmbar und darin wieder einsetzbar ist. Dazu ist zum Beispiel der Baugruppenrahmen 7a mit Schienen versehen, wie in der Figur angedeutet, die im Hauptrahmen verschiebbar gelagert sind. Mit Vorteil können auf diese Weise Instandhaltungsarbeiten oder das Ersetzen von Komponenten bequem von ausserhalb des Gehäuses durchgeführt werden. Die vorliegende Vorrichtung weist eine Vielzahl beweglicher Teile auf, womit bekanntlich ein vergleichsweise hoher Wartungsaufwand einhergeht. Das macht die Zusammenfassung von Einheiten der Messvorrichtung in einer herausnehmbaren Baugruppe besonders vorteilhaft.

Die Messvorrichtung kann genau eine Messeinheit umfassen, was beispielhaft in den Figuren gezeigt ist.

Alternative könnte sie aber auch mehrere Messeinheiten umfassen (nicht gezeigt), welche jeweils auf einer eigenen ersten Ringschiene angeordnet und entlang der Längsachse verteilt wären. Die Messeinheiten würden in diesem Fall mit einem Versatz zueinander in Umfangsrichtung der ersten Ringschienen angeordnet sein und mit derselben Soll-Winkelgeschwindigkeiten angetrieben werden, so dass mehrere simultane Messungen unterschiedlicher Abschnitte des Leitungsrohrs durchgeführt werden könnten. Zwar würde die Messvorrichtung dadurch in x-Richtung länger und auch komplexer sein, jedoch könnte je nach Anwendung die Erhöhung des Durchsatzes der zu messenden Gegenstände diese Nachteile kompensieren.

Es ist bevorzugt, wenn auf der Eingangsseite ein trichterförmiges Führungsrohr 1f vorgesehen ist, um das Leitungsrohr vor dem Eintritt in die Messvorrichtung zu zentrieren und zum Schutz des Bedienpersonals vor unbeabsichtigtes Hineingreifen in die Durchgangsöffnung. Damit wird eine potentielle Beschädigung der Messvorrichtung und/oder des Leitungsrohrs vermieden, z.B. falls dieser mit einem derartigen radialen Versatz eingeführt würde, dass die Frontseite des Leitungsrohrs gegen den Rand der Durchgangsöffnung anstossen würde.

**Fig. 3** zeigt eine seitliche Explosionsansicht der Komponenten der Baugruppe aus Fig. 2. Nach dem eingangsseitigen Führungsrohr 1f ist eine Datenübertragungseinheit 9 angeordnet, welche bevorzugt als kapazitive Datenübertragung ausgestaltet ist. Aufgrund der als Rotationseinheit ausgestalteten Baugruppe ist es vorteilhaft, wenn die Datenübertragung von der rotierenden Messeinheit 4 zur hier nicht gezeigten und bevorzugt stationären Recheneinheit ohne direkte galvanische Verbindung erfolgt. Mit anderen Worten umfasst die Datenübertragungseinheit einen mit der Messeinheit rotierenden als Rotor ausgestalteten Koppler 9, der mittels einer galvanischen Verbindung 4a mit der Messeinheit verbunden ist, und einen mit dem Koppler kapazitiv verbundenen Stator (nicht gezeigt), der seinerseits mit der stationären Recheneinheit verbunden ist. Die Datenübertragung ist bevorzugt Ethernet-basiert. Die Datenübertragungseinheit kann aber auch zusätzlich oder alternativ Mittel für eine drahtlose Übertragung umfassen. Jedoch ist die kapazitive Datenübertragung aufgrund der kleineren Störanfälligkeit bevorzugt. Es ist bevorzugt, wenn die Datenübertragungseinheit 9 und die Stromversorgungseinheit 6 in einem Bauteil als hybride Drehkupplung zusammengefasst sind. Dies vereinfacht die Messvorrichtung und bietet gleichzeitig eine kontaktlose Daten- und Leistungsübertragung. In der Figur sind die Datenübertragungseinheit 9 und die Stromversorgungseinheit 6 mittels der ringförmigen Trageinheit 3 miteinander mechanisch verbunden.

Weiter ist der Motor 5 am Baugruppenrahmen 7a befestigt. Am Motor ist eine erste Riemenscheibe 5b befestigt. An der ringförmigen Trageinheit 3 ist eine zweite Riemenscheibe 5c fest angebracht. Beide sind mittels eines Riemens 5b mechanisch verbunden, so dass der Motor die ringförmige Trageinheit, und damit die Messeinheit und den Rotor oder die Rotoren der Datenübertragungseinheit und der Stromversorgungseinheit (je nachdem ob diese zusammengefasst sind oder nicht) drehen kann. Der Antrieb mittels des Motors 5 kann alternativ auch kugellager-basiert sein. Aufgrund der geforderten Positionierungspräzision ist ein Keilriemenantrieb nicht bevorzugt, jedoch u.U. für höhere Drehmomente und Drehzahlen denkbar.

Die Messeinheit 4 ist an der ersten Ringschiene 3a befestigt, welche wiederum fest an der ringförmigen Trageinheit 3 fixiert oder Teil davon ist.

Wie erwähnt umfasst die Messvorrichtung eine Stromversorgungseinheit 6, welche eine elektrisch leitende und mit einer externen Netzversorgung gekoppelte ringförmige Stromversorgungsschiene für die Stromversorgung umfasst. Die Stromversorgung ist mit Schleifkontakten, insbesondere einem Schleifring, zum Abgreifen des Stroms von der Stromversorgungsschiene für die Versorgung der Messeinheit, der Antriebseinheit, der Steuerung und der Datenübertragungseinheit mit Strom versehen. Mit Vorteil können also auf diese Weise die rotierenden Elemente der Messvorrichtung kontaktlos mit Leistung versorgt werden.

Schliesslich zeigt die Figur den Lasersensor 10. Dieser ist zusätzlich zur bereits erwähnten Funktion der Detektion des Eintritts des Leitungsrohrs in die Durchgangsöffnung auch zur Bestimmung eines Aussenprofils des länglichen Gegenstands und/oder zum Bestimmen der Zentrierungsgenauigkeit des Leitungsrohrs in Bezug auf die Längsachse der Durchgangsöffnung bestimmt. Er ist auch mittels der Antriebseinheit mit der Soll-Winkelgeschwindigkeit auf der ersten Ringschiene verfahrbar. Alternativ kann der Lasersensor auf einer zweiten, zur ersten Ringschiene parallelen Ringschiene (nicht gezeigt) der ringförmigen Trageinheit eigenständig mit der Soll-Winkelgeschwindigkeit oder einer unterschiedlichen Winkelgeschwindigkeit verfahrbar sein. Es ist jedoch bevorzugt, wenn der Lasersensor mit der Soll-Winkelgeschwindigkeit rotiert, da sonst zusätzliche mechanische Mittel für die Bereitstellung einer unterschiedlichen Winkelgeschwindigkeit vorgesehen werden müssten, was die Messvorrichtung unnötig komplizieren würde. Der Lasersensor ist auch mit der Datenübertragungseinheit verbunden. Im Falle der Bestimmung der Zentrierungsgenauigkeit ist ein Wert der Zentrierungsgenauigkeit an die Recheneinheit zur allfälligen Berücksichtigung bei einer Berechnung des Parameters des Leitungsrohrs übertragbar. Der Lasersensor ist bevorzugt so nah wie möglich an der Eingangsseite der Messvorrichtung, insbesondere vor der Messeinheit angeordnet, so dass er frühzeitig Abweichungen der Zentrierung detektieren kann.

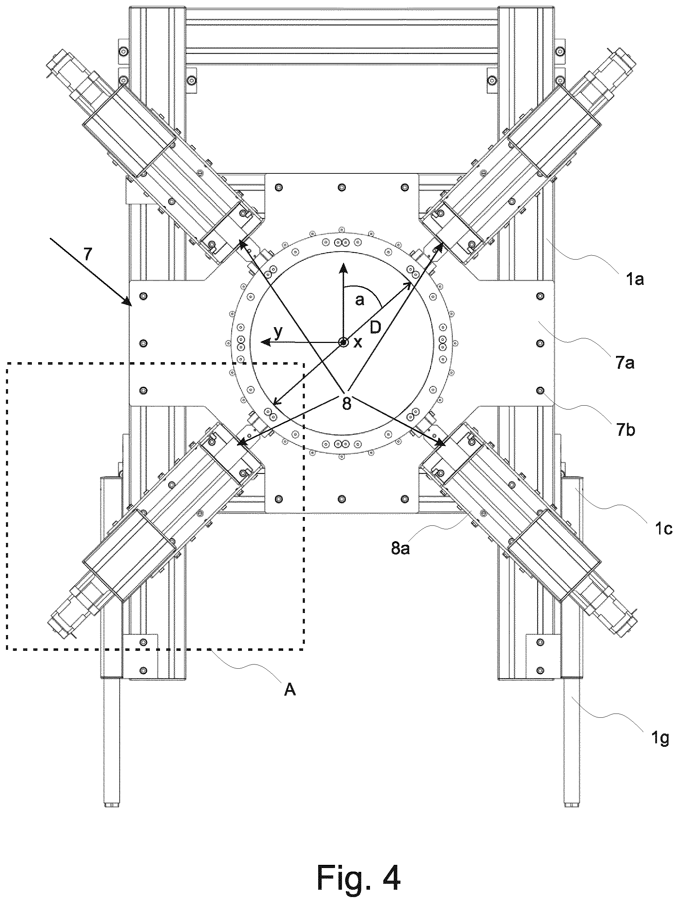

**Fig. 4** zeigt eine Frontansicht, von der Eingangsseite aus gesehen, des Hauptrahmens des Gehäuses 1a der Messvorrichtung aus Fig. 1 mit der Baugruppe 7 aus Fig. 2. Dabei ist ersichtlich, dass der Baugruppenrahmen 7a am Hauptrahmen 1a mittels Befestigungsmittel 7b fixiert ist. In dieser Ausführungsform ist die Baugruppe nicht aus dem Hauptrahmen herausnehmbar, im Gegensatz zur Ausführungsform nach Fig. 2.

In einer bevorzugten Ausführungsform umfasst die Messvorrichtung Positionierungsmittel 1c, so dass die Baugruppe innerhalb des Gehäuses höhen- und/oder seitenverstellbar ist, wobei in der Figur nur die Höhenverstellbarkeit an den Füssen 1g der Messvorrichtung dargestellt ist. Mit Vorteil kann dadurch die Durchgangsöffnung an die Position des zu messenden Leitungsrohrs angepasst werden, so dass eine Anpassung der Produktionsanlage für die wärmegedämmten Leitungsrohre oder für jeden anderen länglichen Gegenstand nicht notwendig ist.

Eine weitere Massnahme, die kumulativ zu den Positionierungsmitteln zum Einsatz kommen kann, ist mit einer Zentrierungseinheit 8 gegeben, die zu einer zentrierten Führung des länglichen Gegenstands in und durch die Durchgangsöffnung und zur Stützung des länglichen Gegenstands beim Durchgang durch die Messvorrichtung vorgesehen ist. Die Zentrierungseinheit umfasst mindestens zwei, wie in der Figur gezeigt bevorzugt vier zur Längsachse der Durchgangsöffnung äquidistante Schlittenelemente 8a an der Eingangsseite der Durchgangsöffnung. Die vier Schlittenelemente sind bevorzugt in gleichen Abständen um die Durchgangsöffnung verteilt, und zwar mit einem Winkelversatz a (ihrer Längsachsen) von der Vertikalen gedreht. Bevorzugt ist dieser Winkel 45°. Mit Vorteil bewirkt dieser Versatz, dass Schmutz weniger leicht nach unten fallen kann. Weiter ist diese Anordnung auch vorteilhaft, da es leichter ist, das Leitungsrohr beim Beenden der Messung, wenn nötig, abzusenken. Ein solches Element wird nachfolgend näher erläutert.

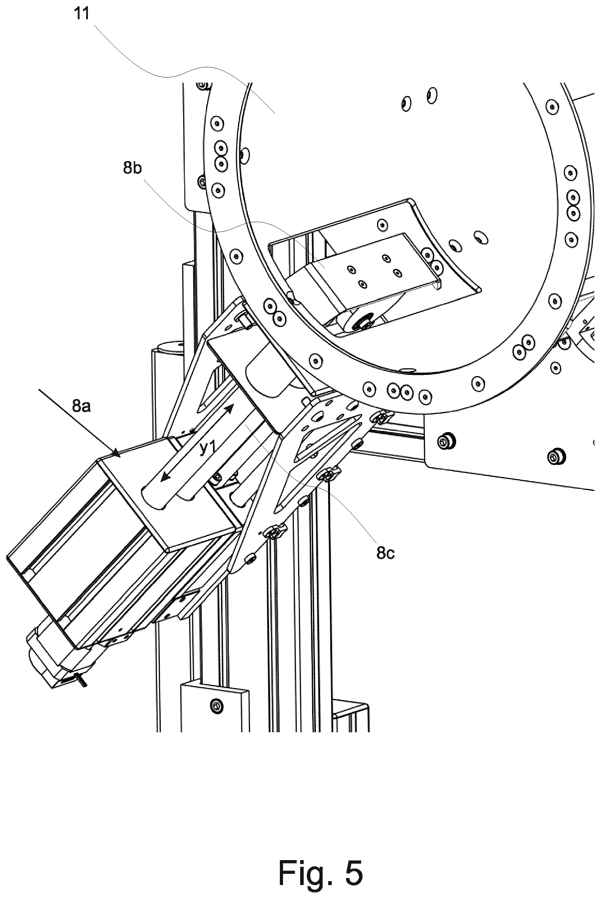

**Fig. 5** zeigt eine Detailansicht A aus Fig. 4 eines Schlittenelements 8a der Messvorrichtung. Es umfasst einen Schlitten 8b, der in Radialrichtung y bezogen auf die Längsachse x der Durchgangsöffnung zur Kontaktierung des ankommenden Leitungsrohrs hin und her verschiebbar ist, was mit dem Doppelpfeil y1 veranschaulicht ist. Mit Vorteil ermöglichen die Schlitten eine Anpassung an unterschiedlichen Aussenprofilen und Durchmesser des Leitungsrohrs. Es ist bevorzugt, wenn die Schlitten eine in Radialrichtung wirkende Federung 8c umfassen, um das Leitungsrohr möglichst schonend aufzunehmen bzw. zu führen. In Ausführungsformen kann die Federung bzw. die Federkonstante angepasst werden, zum Beispiel so, dass die Federung beim erstmaligen Eintritt des Leitungsrohrs in die Durchgangsöffnung weicher ist, um das Rohr schonend aufzunehmen, und anschliessend beim Durchgang des Leitungsrohrs durch die Durchgangsöffnung härter ist, um Abweichungen von der Zentrierung des Leitungsrohrs aufgrund der Bewegung bzw. des Durchhängens des Leitungsrohrs besser entgegenzuwirken. Dabei können auch nur einzelne Federelemente individuell angesteuert werden.

In Ausführungsformen umfasst die Zentrierungsvorrichtung weiter ein Schutzrohr 11 für eine Erhöhung der Stabilität der Zentrierungsvorrichtung. Das Schutzrohr erstreckt sich durch die gesamte Durchgangsöffnung und weist Aussparungen auf, durch welche jeweils einer der Schlitten von ausserhalb des Schutzrohrs in dieses hineinragen kann. Mit Vorteil verhindert das Schutzrohr Beschädigungen der Messvorrichtung oder des Leitungsrohrs.

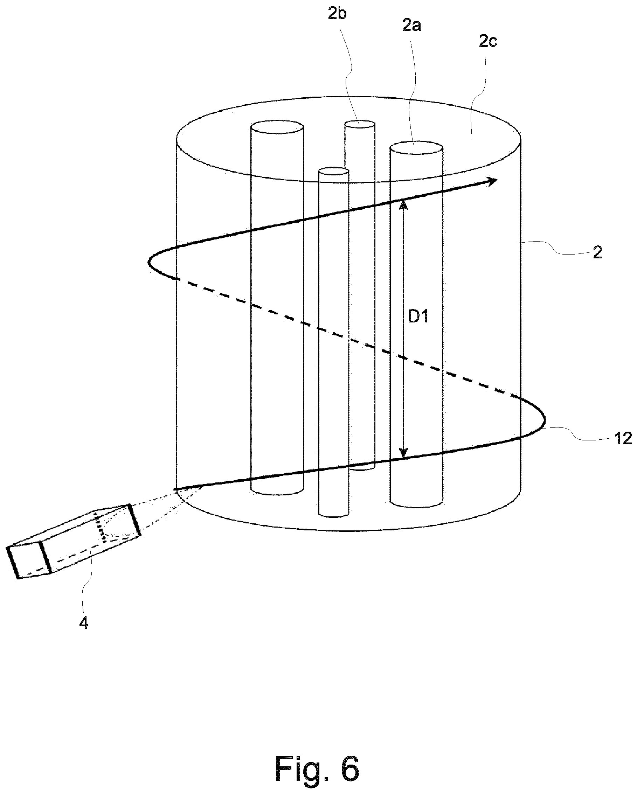

**Fig. 6** zeigt eine schematische beispielhafte Ansicht der Messweges einer Messeinheit 4 der Messvorrichtung beim Messen einer wärmegedämmten Leitung. Die Messeinheit dreht sich auf einer Kreisbahn um das Leitungsrohr 2, welches hier beispielhaft die Isolationsschicht 2c und darin eingeschäumt zwei dickere Innenrohre 2a und zwei dünnere Innenrohre 2b umfasst. Es können beliebige Konfigurationen mit Innenrohren unterschiedlicher Durchmesser gemessen werden. Aufgrund der Drehung der Messeinheit und der linearen Bewegung des Leitungsrohrs in Produktionsrichtung ergibt sich eine schraubenförmige Messbahn 12.

Wie aus der Figur zu entnehmen ist, entsteht durch die überlagerten Bewegungen ein Versatz D1 zwischen zwei konsekutiven Messungen (Offsetwerte) der Messeinheit auf einer selben, zur Längsachse des Leitungsrohrs parallelen Linie. Je nach Soll-Winkelgeschwindigkeit der Messeinheit und Durchlaufgeschwindigkeit des Leitungsrohrs kann die schraubenförmige Messbahn mehr oder weniger gestreckt bzw. gestaucht sein. Mit anderen Worten wird die Messbahn gestreckt, wenn die Durchlaufgeschwindigkeit erhöht wird und/oder die Soll-Winkelgeschwindigkeit vermindert wird und die Messbahn wird gestaucht, wenn die Durchlaufgeschwindigkeit vermindert wird und/oder die Soll-Winkelgeschwindigkeit erhöht wird. Im Normalfall ist die Durchlaufgeschwindigkeit durch die vorgeschaltete Produktionsanlage vorgegeben und kann aufgrund von Herstellungsparameter des Leitungsrohrs nicht geändert werden. Um repräsentative Messungen zu generieren, ist je nach Leitungsrohr ein maximal zulässiger Offsetwert definiert, bei dem mögliche Abweichungen der Messwerte des Leitungsrohrs noch im Rahmen gültiger Toleranzen sind. Um diesen maximal zulässigen Offsetwert einzuhalten, muss in manchen Fällen die Soll-Winkelgeschwindigkeit angepasst werden. Zu diesem Zweck umfasst die Messvorrichtung vorzugsweise einen mit der Steuerung gekoppelten Geschwindigkeitssensor (nicht gezeigt) zum Messen der Durchlaufgeschwindigkeit des Leitungsrohrs durch die Durchgangsöffnung. Dabei ist die Steuerung derart konfiguriert, dass sie basierend auf Messdaten des Geschwindigkeitssensors die Antriebseinheit 5 zum Einstellen der, insbesondere konstanten, Soll-Winkelgeschwindigkeit für eine gemessene Durchlaufgeschwindigkeit steuert, und zwar so steuert, dass die Soll-Winkelgeschwindigkeit der Messeinheit in einer vorgegebenen Zeit erreicht ist. Die Soll-Winkelgeschwindigkeit wird also in Abhängigkeit von der Durchlaufgeschwindigkeit durch die Durchgangsöffnung oder der Produktionsgeschwindigkeit des Leitungsrohrs und von einem maximal zulässigen Offsetwert zweier konsekutiven Messungen der Messeinheit auf einer selben, zur Längsachse des Leitungsrohrs parallelen Linie eingestellt oder errechnet. Zum Beispiel ergibt sich bei einer Durchlaufgeschwindigkeit von 4 m/min und einem maximalen Offsetwert von 13 cm eine minimale Winkelgeschwindigkeit von 30 U/min. Bei einem wärmegedämmten Leitungsrohr mit mindestens einem Innenrohr und einer das mindestens eine Innenrohr umgebende Isolationsschicht beträgt der maximal zulässige Offsetwert vorzugsweise höchstens 20% eines minimalen Biegeradius eines der in der Wärmedämmung verlaufenden Innenrohre.

Natürlich kann die eingestellte Winkelgeschwindigkeit höher sein, was gewünscht ist, um bessere Messergebnisse zu erhalten. Die eingestellte Winkelgeschwindigkeit kann auch von Messparametern für die Messung selbst abhängen, zum Beispiel sollte sie nicht zu hoch sein, wenn sich dadurch die Messgenauigkeit verschlechtert. Wenn diese Kriterien berücksichtigt werden, ergibt sich eine optimale Soll-Winkelgeschwindigkeit oder ein optimaler Soll-Winkelgeschwindigkeitsbereich.

Wie im Kontext von Fig. 2 erwähnt, kann die Messeinheit aber auch mehrere Messeinheiten umfassen (nicht gezeigt), welche jeweils auf einer eigenen ersten Ringschiene in Produktionsrichtung nacheinander angeordnet und entlang der Längsachse verteilt wären. Die Messeinheiten würden in diesem Fall mit einem Versatz zueinander in Umfangsrichtung der ersten Ringschienen angeordnet sein und mit derselben Soll-Winkelgeschwindigkeiten angetrieben werden, so dass mehrere simultane Messungen unterschiedlicher Abschnitte des Leitungsrohrs durchgeführt werden könnten. Damit kann die Durchlaufgeschwindigkeit der Leitungsrohre, und damit die Produktivität, erhöht werden, wenn das bei der verwendeten Produktionsanlage möglich ist.

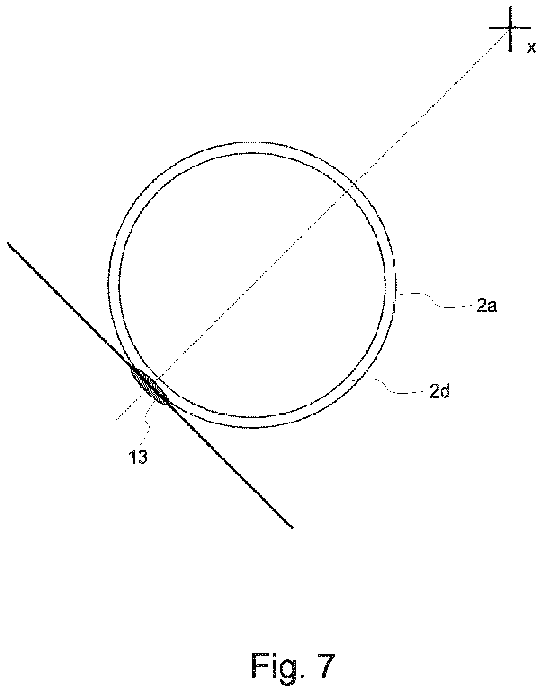

**Fig. 7** zeigt eine schematische beispielhafte Ansicht eines Signalmaximums 13 im Messbereich der Messvorrichtung bezogen auf die Längsachse x als Rotationsmittelpunkt. In der Figur ist ein Innenrohr 2a oder 2b dargestellt. Das Signalmaximum 13 entsteht dort, wo die Aussenfläche des Innenrohrs 2a tangential zur Rotationsbewegung der Messeinheit verläuft. Wie oben erläutert, gibt es ein Versatz D1 zwischen zwei Offsetwerten auf jeder selben Linie, die parallel zur Rotationsachse verläuft. Auf der Basis zweier benachbarten Offsetwerten können die übrigen Werte, die sich im Versatz zwischen diesen zwei benachbarten Offsetwerten befinden, interpoliert werden.

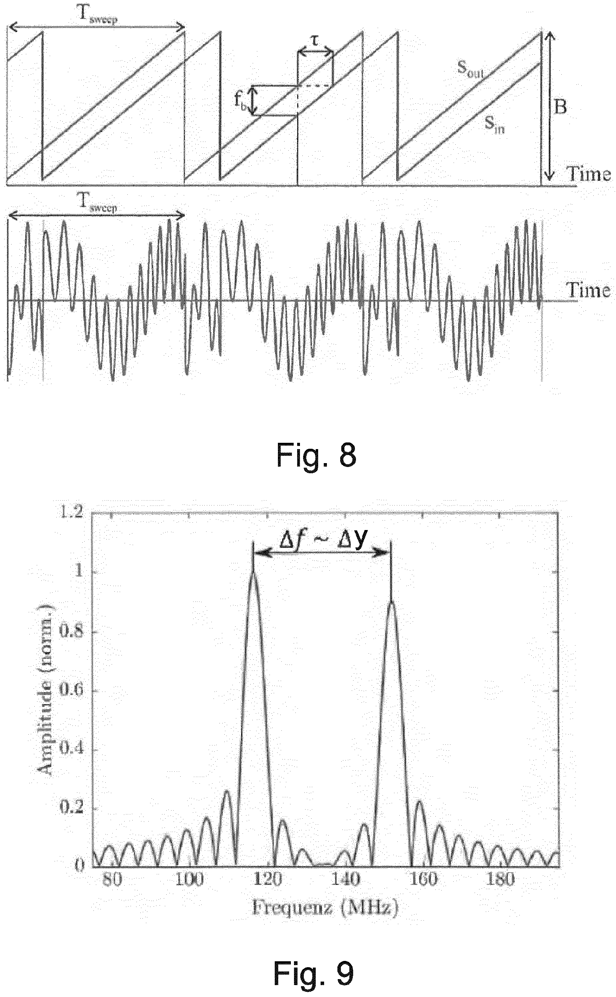

**Fig. 8** zeigt einen beispielhaften Signalverlauf verschiedener Signale der Messung. Der obere Teil der Figur zeigt das linear modulierte FMCW-Sendesignal Sₒᵤₜ, das dem ersten THz-Signal entspricht, und das von einem Reflektor (Reflektionsfläche, welche einer stofflichen Trennfläche zwischen zwei Materialien entspricht) zurückgeworfene Signal Sᵢₙ, das dem zweiten THz-Signal entspricht. Das im unteren Teil der Figur gezeigte, um *τ* zeitlich versetzte reflektierte Signal resultiert durch das Mischen in einer Schwebefrequenz f_{b} beim Empfänger.

Im vorliegenden Beispiel wird als Parameter bevorzugt ein Abstand d einer Trennfläche zwischen einem Innenrohr und der Isolationsschicht des Leitungsrohrs vom Sensorkopf mittels der Recheneinheit berechnet. Der Abstand d des Reflektors ergibt sich gemäss der nachfolgenden Formel (I): $d = \frac{c}{2 n} τ = \frac{{cf}_{b} {T}_{sweep}}{2 nB} = {δ}_{r} {f}_{b} {T}_{sweep}$ (I) wobei
c die Lichtgeschwindigkeit ist,
n der Brechungsindex des Materials, an dem das erste THz-Signal reflektiert wird, ist,
*T_{sweep}* die Dauer der oben erwähnten Frequenzrampe ist,
*τ* die zeitliche Verschiebung zwischen dem ersten und dem zweiten THz-Signal ist,
*f_{b}* die Schwebefrequenz der Überlagerung des ersten und des zweiten THz-Signals ist,
*δᵣ* eine Tiefenauflösung der Messeinheit ist, und
*B* die Modulationsbandbreite ist, welche bevorzugt mindestens 20 GHz, noch mehr bevorzugt 45 GHz oder mehr beträgt.

Die laterale Auflösung steigt dabei mit wachsender Mittenfrequenz des nutzbaren THz-Spektrums und die Tiefenauflösung *δᵣ* steigt mit wachsender Bandbreite B. Ein in Experimenten verwendeter integrierter Sensor erreicht eine Bandbreite von 45 GHz und operiert bei Frequenzen von 124 bis 169 GHz.

Das Messverfahren zum Betrieb der Messvorrichtung umfasst die nachfolgend erläuterten Schritte.

In einem Schritt a) wird der Eintritt des Leitungsrohrs in die Durchgangsöffnung detektiert, was z.B. mit dem Lasersensor oder einer Lichtschranke geschehen kann.

In einem Schritt b) wird die Messeinheit mittels der Antriebseinheit auf die Soll-Winkelgeschwindigkeit beschleunigt. Dieser Schritt kann aber auch vor dem Schritt a) erfolgen, wenn der Messvorrichtung eine bevorstehende Messung signalisiert worden ist. Mit Vorteil ist dadurch ein kleineres Drehmoment nötig, um die Messeinheit auf die Soll-Winkelgeschwindigkeit zu beschleunigen als wenn sich das Leitungsrohr bereits am Eingang der Durchlauföffnung befindet. Je nach Anforderungen können dabei verschiedene Antriebstypen, wie bereits erläutert, eingesetzt werden.

In einem Schritt c) wird ein Messvorgang mittels der Steuerung gestartet, sobald die Messeinheit die Soll-Winkelgeschwindigkeit erreicht hat. Dabei sendet die Messeinheit das erste THz-Signal in Richtung des länglichen Gegenstands bevorzugt kontinuierlich aus.

In einem Schritt d) wird die Messeinheit mittels der Antriebseinheit mit der Soll-Winkelgeschwindigkeit während eines Vorschubs des länglichen Gegenstands durch die Durchgangsöffnung kontinuierlich gedreht und dabei werden kontinuierlich Messungen vorgenommen.

In einem Schritt e) empfängt die Messeinheit das von einem Element des Leitungsrohrs reflektierte zweite THz-Signal und in einem Schritt f) wird das erste THz-Signal mit dem reflektierten zweiten THz Signal gemischt, wobei ein so gemischtes Signal des Messvorgangs an die Recheneinheit übertragen wird.

In einem Schritt g) wird aus dem gemischten Signal ein Laufzeitunterschied zwischen dem ersten und dem zweiten THz-Signal berechnet und damit das mindestens eine Parameter selbst und optional der mindestens eine vom Parameter abgeleitete Wert hergeleitet und als Messergebnis ausgegeben. Dabei kann das Messergebnis entweder an die Benutzerschnittstelle oder an eine Hauptsteuerung der Produktionsanlage ausgegeben werden.

Das erste THz-Signal wird aus einem Frequenzbereich zwischen 0.003 THZ und 3 THz, bevorzugt zwischen 0.1 THz und 0.2 THz, ausgewählt. Besonders bevorzugt beträgt eine Mittenfrequenz 0.15 THz. Das erste THz-Signal hat bevorzugt die Form einer linear modulierten Frequenzrampe.

**Fig. 9** zeigt ein Beispiel von Fourier-transformierten Sensordaten, die zwei separate Reflektoren im Raum zeigen. Durch Fourier-Transformation kann das empfangene und gemischte Signal (Fig. 8) in seine Frequenzanteile zerlegt werden. Da dabei die Frequenzanteile direkt proportional zur Signallaufzeit und damit dem Abstand der Reflektoren sind, ergibt sich daraus eine Schätzung des Reflektionsraums. Das ist in der Figur mit dem Abstand Δf ≈ Δy veranschaulicht. Dabei bezeichnet y die radiale Richtung wie in Fig. 2 gezeigt. Wie im Kontext von Fig. 7 mit dem Signalmaximum 13 gezeigt, kann der stärkste Rückreflex (zweites THz-Signal) eines Innenrohres mit der umlaufenden Messeinheit detektiert werden, wenn die Messeinheit genau orthogonal auf dessen Oberfläche zeigt.

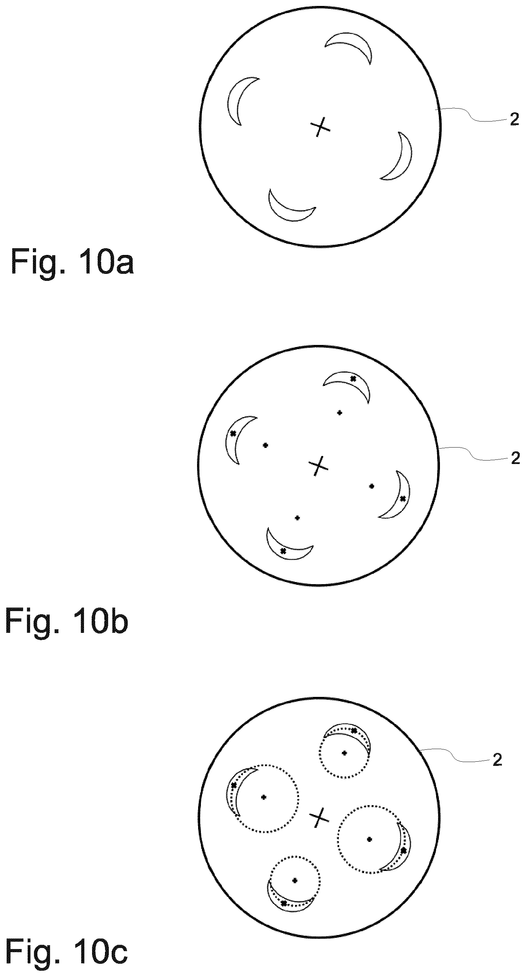

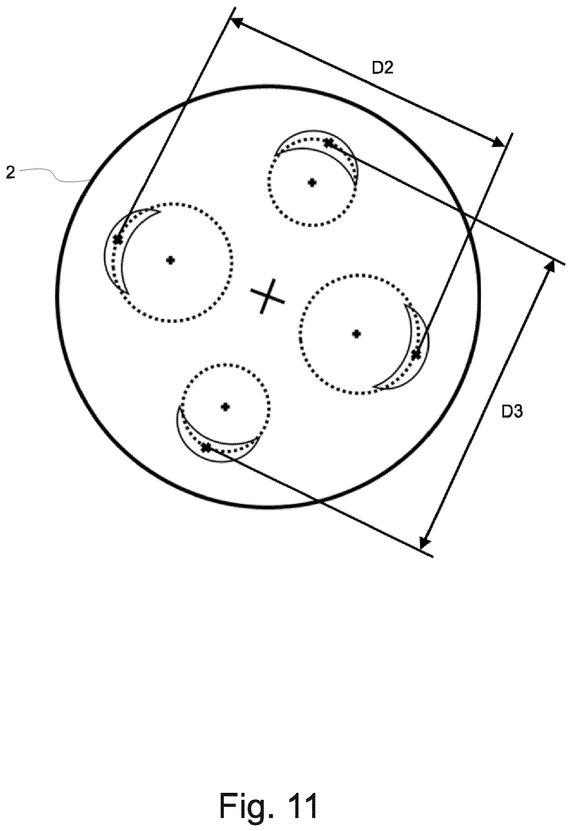

**Fig. 10a-10c** zeigen jeweils ein Darstellungsbeispiel von Messdaten mit Maxima gemäss Fig. 7, und **Fig. 11** eine schematische beispielhafte Darstellung der Abstände von Innenröhren einer wärmegedämmten Leitung als Beispiel für einen länglichen Gegenstand.

**Fig. 10a** zeigt einen schematischen und vereinfachten angepassten Scan der schraubenförmigen Messung (vgl. Fig. 6). Die sichelförmigen Gebilde stellen Bereiche mit grösserer Amplitude des gemischten Signals dar. Die Sichelform entsteht, wenn das Innenrohr nicht zentriert bezogen auf die Längsachse der Durchgangsöffnung (Rotationszentrum) angeordnet ist. Bei mehreren Innenrohren, wie im Beispiel von Fig. 6, ist das inhärent der Fall. Ist nur ein einziges Innenrohr vorgesehen, das zentriert angeordnet ist, kann der THz-Sensor das Innenrohr von allen Seiten detektieren und die o.g. Gebilde werden kreisförmig, was im Falle eines einziges Innenrohrs bereits schon Aufschluss über eine korrekte oder fehlerhafte Anordnung geben kann. In diesen Bereichen der sichelförmigen oder kreisförmigen Gebilde sind auch die jeweiligen Maxima (Innenrohrreflexe) zu finden, welche Maxima in **Fig. 10b** mit den Punkten in der Mitte der Gebilde identifiziert sind. Da diese Innenrohrreflexe an den Materialtrennlinien zwischen der Isolationsschicht und der Innenrohrwandung auftreten, können die Innenrohre bzw. ihre Position nachgebildet werden, was mit den Kreisen in **Fig. 10c** dargestellt ist. Fig. 10c ist in Fig. 11 um Abstände D2 und D3 zwischen den Aussenwänden von jeweils zwei gegenüberliegenden Innenrohren des Leitungsrohrs aus Fig. 6 erweitert. Basierend auf die ermittelten Signalmaxima können diese zwei Abstände berechnet werden. Da der Aufbau des Rohres und die Durchmesser der Innenrohre bekannt sind, können die Positionen der Innenrohre eindeutig bestimmt werden.

Wie erwähnt wird als Parameter ein Abstand d der Trennfläche zwischen zwei verschiedenen Materialien des länglichen Gegenstands vom Sensorkopf gemessen. Daraus kann als vom Parameter abgeleiteter Wert auch der Abstand der Trennfläche von der Rotationsachse x, wie in Fig. 6 gezeigt, berechnet werden, da der Abstand des Sensorkopfes, also der Messeinheit, von der Rotationsachse bekannt ist.

Alternativ können im Falle einer wärmegedämmten Leitung als länglicher Gegenstand weitere vom Parameter abgeleitete Werte hergeleitet werden, ausgewählt aus den nachfolgenden Grössen:
- Lage des Innenrohrs oder der Innenrohre im Aussenrohr bezogen auf die Längsachse der Aussenrohrs; diese Grösse kann ermittelt werden, wenn das Leitungsrohr bereits fertig hergestellt ist und bereits mit einem Aussenrohr versehen wurde.
- Abweichung der Lage des mindestens einen Innenrohrs von einer Soll-Lage; die Grösse kann unabhängig davon, ob eine Aussenrohr vorahnden ist oder nicht, durch Vergleich der gemessenen Positionen der Innenrohre mit den Produktionsvorgaben hergeleitet werden.
- wie bereits beschrieben, bei mehreren Innenrohren ein oder mehrere Abstände D2, D3 zweier beliebiger, insbesondere zweier gegenüberliegenden, Innenrohre voneinander;
- maximaler Aussendurchmesser der Isolationsschicht; wie bereits für die Innenrohre beschrieben, kann das Messverfahren analog auch für die Trennlinie zwischen der Isolationsschicht und der Aussenluft oder dem Aussenrohr als verschiedene Materialien angewendet werden. In Fig. 10a-c wären dafür weitere sichelförmige Bereiche sichtbar.
- Dicke des Innenrohrs oder des Aussenrohrs; diese Grössen können basierend auf demselben Messprinzip hergeleitet werden.

Als Parameter kann auch eine Materialbeschaffenheit eines metallischen oder dielektrischen Elements des Leitungsrohrs berechnet werden, bevorzugt eine Materialbeschaffenheit der Wandung des mindestens einen Innenrohrs der wärmegedämmten Leitung. Das ist möglich, da viele Substanzen im Terahertz-Bereich charakteristische Absorptionslinien aufweisen, die ausgewertet werden können und Rückschlüsse über die Beschaffenheit geben.

Das im Kontext der Fig. 6 beschriebene grundsätzliche Messverfahren kann um einen kombinierten Schritt x) erweitert werden. Nach dem Schritt a) kann im Rahmen des Schritts x) zunächst eine Zentrierungsgenauigkeit des länglichen Gegenstands in Bezug auf die Längsachse der Durchgangsöffnung bestimmt und als Wert ein Zentrierungsoffset ausgegeben werden, welcher einem radialen Versatz der Längsachse des Leitungsrohrs von der Längsachse der Durchgangsöffnung entspricht. Anschliessend kann der Zentrierungsoffset an die Recheneinheit zur allfälligen Berücksichtigung bei der Berechnung des Parameters oder des davon abgeleiteten Parameters übertragen werden, wenn der Parameter ein positionsbedingter Parameter ist. Es ist bevorzugt, wenn ein maximal zulässiger Zentrierungsoffset in Abhängigkeit von einer vorgegebenen Messgenauigkeit in einem Bereich zwischen 5% und 10% des Durchmessers der Durchgangsöffnung festgelegt wird. Bei der Anwendung des Messverfahrens für wärmegedämmte Leitungsrohre ist bevorzugt ein maximal zulässiger Zentrierungsoffset vom 15 mm festgelegt.

Die Zentrierungsgenauigkeit wird in Abhängigkeit von einer Konfiguration der Leitung entweder mittels eines Lasersensors oder mittels der Messeinheit selbst durchgeführt.

Wenn das Leitungsrohr die Isolationsschicht und das mindestens eine Innenrohr und insbesondere kein Aussenrohr aufweist, kann die Messung mittels des Lasersensors 10 und/oder der Messeinheit durchgeführt werden.

Alternativ, wenn das Leitungsrohr die Isolationsschicht, das mindestens eine Innenrohr und insbesondere ein Aussenrohr aufweist, kann die Messung mittels der Messeinheit selbst durchgeführt werden.

Diese Unterscheidung rührt von der Materialbeschaffenheit der zwei die Trennlinie bildenden Elemente ab. Wie erläutert, sind an solchen Trennlinien die Maxima des verarbeiteten gemischten THz-Signals zu erwarten. Je nach Materialien der Elemente kann es sein, dass die Reflexion an einer bestimmten Trennlinie mehr oder weniger ausgeprägt ist. Folglich können Materialkonfigurationen auftreten, bei den ein Maximum wegen der kleinen Amplitude schwer zu detektieren ist. Es hat sich gezeigt, dass ein solcher Fall eintreten kann, wenn das Leitungsrohr ohne Aussenrohr gemessen wird, da die Aussenluft und das Material der Isolationsschicht keine gut unterscheidbaren Maxima ergeben. Die Zuverlässigkeit der Messungen in diesem Fall kann auch variieren, je nachdem ob die Isolationsschicht eine glatte oder gewellte Aussenfläche hat, wobei das letztere schlechtere Messergebnisse liefert. In einem solchen Fall kann die Messung alternativ, oder zur Bestätigung der Messung mit der Messeinheit zusätzlich, mittels des Lasersensor, bevorzugt der Laserklasse 1, durchgeführt und so die gemessenen Werte zuverlässig bis zu einem Offset von ca. 15 mm in diesem speziellen Fall korrigiert werden.

Hingegen hat sich bei Vorliegen eines Aussenrohrs gezeigt, dass die Messeinheit zuverlässige Ergebnisse liefert und keine Messung mit dem Lasersensor notwendig ist.

Ein weiterer Faktor der die Zuverlässigkeit von Messungen an problematischen Materialkombinationen an der Trennlinie beeinflusst ist die Bandbreite des Terahertz-Sensors oder eines jeden anderen FMCW-Radar-Systems (die Messeinheit). Sie bestimmt die Auflösung in Tiefenrichtung (y-Richtung). Das bedeutet, dass höhere Bandbreiten das Separieren von enger beieinander liegenden Grenzschichten ermöglichen. Gleichzeitig ergeben höhere Frequenzen eine höhere laterale Auflösung, welche im vorliegenden Fall der Auflösung entlang des Umfangs entspricht. Mit anderen Worten ist es also ein Unterschied, ob 45 GHz Bandbreite um 100 GHz oder 45 GHz Bandbreite um 150 GHz verwendet wird. Die Auflösung entlang des Umfangs ist im letzteren Fall besser. Hingegen führen höhere Arbeitsfrequenzen (>0.5 THz) allerdings dazu, dass der Schaum der Isolationsschicht zunehmend schlechter durchdrungen werden kann. Je nach gefordertem Genauigkeitsbereich sind Arbeitsfrequenzen von 0.05 - 0.5 THz für die Anwendung bei wärmegedämmten Leitungsrohren sinnvoll, wobei die niedrige Auflösung entlang des Umfangs bei 0.05 THz für grosse Rohrdurchmesser ausreichend sind.

Es ist besonders bevorzugt, für die Messeinheit vollintegrierte Sensoren mit digitaler Schnittstelle einzusetzen, da eine analoge Signalübertragung zu stark durch einen Drehübertrager gestört würde.

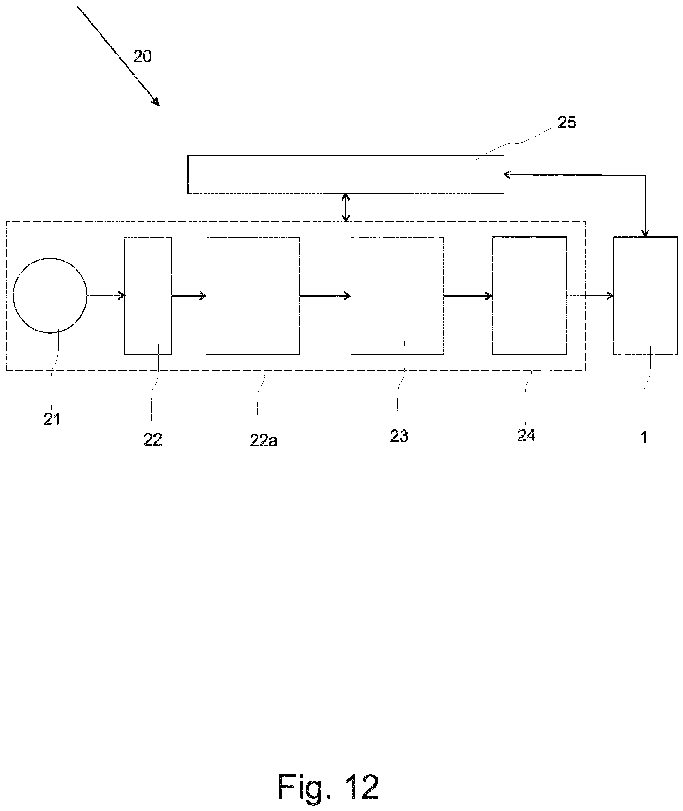

**Fig. 12** zeigt eine erfindungsgemässe Produktionsanlage für ein wärmegedämmtes Leitungsrohr mit einer erfindungsgemässen Messvorrichtung gemäss Fig. 1. Die Produktionsanlage 20 umfasst nacheinander in Produktionsrichtung eine Abwicklungsstation 21 zum Abwickeln des mindestens einen Innenrohrs von einer Vorratswickel, eine Folienstation 22 zur Bildung eines Folienschlauchs um das mindestens eine Innenrohr herum und zur Einbringung 22a eines schaumbildenden Ausgangsmaterials in den Folienschlauch, welches schaumbildende Material als Isolationsschicht aushärtet. Weiter umfasst sie mindestens zwei Formbacken 23 zum Einbringen einer Tiefenwellung in die ausgehärtete Isolationsschicht. Diese Stationen der Produktionsanlage sind bekannt und werden daher nicht im Detail beschrieben. Es wird angemerkt, dass die Produktionsanlage zusätzliche Stationen, die bei der Herstellung von wärmegedämmten Leitungsrohren vorkommen können, umfassen kann, so z. B. eine Bremsraupe zwischen der Vorratswickel und der Folienstation. Weiter umfasst die Produktionsanlage eine erfindungsgemässe Messvorrichtung 1, welche zum Messen des Parameters mit dem erfindungsgemässen Messverfahren betrieben wird.

Die Messvorrichtung kann bei der Produktionsanlage zum Messen eines noch nicht fertigen Leitungsrohrs das noch keinen Aussenmantel hat, verwendet werden. Die Produktionsanlage kann aber auch weiter einen Extruder zum Extrudieren eines Aussenrohrs auf die Isolationsschicht umfassen. Wenn die Messvorrichtung das noch nicht fertige Leitungsrohr messen soll, wird sie vor dem Extruder angeordnet. Sie kann aber auch in Produktionsrichtung nach dem Extruder angeordnet sein, wenn das fertige wärmegedämmte Leitungsrohr gemessen werden soll. Diese Alternative ist in Fig. 12 gezeigt.

Die Produktionsanlage umfasst vorzugsweise eine Hauptsteuerung 25, welche derart ausgestaltet ist, dass sie der Steuerung der Messvorrichtung ein Metrierungssignal schickt, welches die Länge der bereits bearbeiteten oder produzierten Leitung beschreibt. Das Metrierungssignal kann dem jeweiligen Messergebnis der Messvorrichtung zugeordnet werden und beide können als Wertepaar gespeichert werden, so dass die Messergebnisse für die fertige Leitung zu einem späteren Zeitpunkt abrufbar sind.

Die Hauptsteuerung ist derart ausgestaltet, dass sie beim Schritt g) des Messverfahrens das Messergebnis von der Datenübertragungseinheit der Messvorrichtung oder von der Recheneinheit der Messvorrichtung empfängt, eine Auswertung des Messergebnisses durchführt und, wenn nötig, geeignete Korrekturmassnahmen durchführt. Es ist bevorzugt, wenn die Auswertung und die Durchführung der Korrekturmassnahmen automatisch erfolgen, wobei selbstverständlich eine Bedienperson über die Benutzerschnittstelle in den Prozess eingreifen und manuelle Anpassungen vornehmen kann.

Die vorliegende Erfindung ermöglicht mit allen Aspekten eine Untersuchung einer Vielzahl von Parametern eines Gegenstands auf zerstörungsfreie und nicht ionisierende Weise mit hoher örtlicher Auflösung. Dabei können positionsbedingte Parameter wie auch materialbedingte Parameter untersucht werden, und zwar vollumfänglich um den gesamten Gegenstand herum.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann. Begriffe wie "bevorzugt" oder "insbesondere" oder "besonders" oder "vorteilhaft" oder dergleichen bezeichnen daher nur optionale und beispielhafte Ausführungsformen.

## Patentansprüche

1. Messvorrichtung (1) zum kontinuierlichen oder abschnittsweisen Messen mittels elektromagnetischer Strahlung im Terahertzbereich mindestens eines örtlichen oder stofflichen Parameters oder eines vom Parameter abgeleiteten örtlichen oder stofflichen Wertes eines länglichen Gegenstands (2) mit einer Längsachse (x), insbesondere eines wärmegedämmten Leitungsrohrs mit mindestens einem Innenrohr (2a; 2b) und einer das mindestens eine Innenrohr umgebende Isolationsschicht (2c), wobei die Messvorrichtung folgendes umfasst:
- ein Gehäuse (1a),
- im Gehäuse eine Durchgangsöffnung (1b) mit einer Eingangsseite und einer Ausgangsseite zum Durchschieben des länglichen Gegenstands durch die Messvorrichtung,
- eine ringförmige Trageinheit (3) mit einer ersten Ringschiene (3a), welche um die Längsachse der Durchgangsöffnung angeordnet und zentriert ist,
- eine auf der ersten Ringschiene verfahrbare Messeinheit (4) umfassend einen Sensorkopf mit einem Sender und einem Empfänger, wobei der Sender zum Senden eines ersten THz-Signals in Richtung des länglichen Gegenstands und der Empfänger zum Empfangen eines zweiten, von einem Element des länglichen Gegenstands reflektierten THz-Signals im Sensorkopf so angeordnet und ausgerichtet sind, dass sie beim Verfahren immer in Richtung des länglichen Gegenstands zeigen,
- eine Antriebseinheit (5), derart ausgestaltet, dass sie die Messeinheit auf der ersten Ringschiene mit einer Soll-Winkelgeschwindigkeit antreibt,
- eine Steuerung zum Ansteuern der Antriebseinheit und der Messeinheit,
- eine mit der Messeinheit verbundene Datenübertragungseinheit (9),
- eine mit der Datenübertragungseinheit gekoppelte Recheneinheit welche derart ausgestaltet ist, dass sie Messdaten von der Datenübertragungseinheit empfängt, verarbeitet und ein Messergebnis ausgibt, wobei als Messergebnis der mindestens eine Parameter selbst oder der mindestens eine vom Parameter abgeleitete Wert ausgebbar ist, und
- eine Stromversorgungseinheit (6) zum Versorgen der Messeinheit, der Antriebseinheit, der Steuerung, der Datenübertragungseinheit und der Recheneinheit mit Strom.

2. Messvorrichtung nach Anspruch 1, umfassend genau eine Messeinheit oder
umfassend mehrere Messeinheiten, welche jeweils auf einer eigenen ersten Ringschiene angeordnet und entlang der Längsachse verteilt sind.

3. Messvorrichtung nach Anspruch 1 oder 2, weiter umfassend einen mit der Steuerung gekoppelten Geschwindigkeitssensor zum Messen der Durchlaufgeschwindigkeit des länglichen Gegenstands durch die Durchgangsöffnung, wobei die Steuerung derart konfiguriert ist, dass sie basierend auf Messdaten des Geschwindigkeitssensors die Antriebseinheit zum Einstellen der, insbesondere konstanten, Soll-Winkelgeschwindigkeit für eine gemessene Durchlaufgeschwindigkeit und in Abhängigkeit von einem maximal zulässigen Offsetwert zweier konsekutiven Messungen der Messeinheit auf einer selben, zur Längsachse des länglichen Gegenstands parallelen Linie, steuert, insbesondere wobei bei einer Durchlaufgeschwindigkeit von 4 m/min und einem maximalen Offsetwert von 13 cm sich eine minimale Winkelgeschwindigkeit von 30 U/min ergibt.

4. Messvorrichtung nach einem der vorangehenden Ansprüche, weiter umfassend einen Lasersensor (10) zum Detektieren des Eintritts des länglichen Gegenstands in die Durchgangsöffnung, wobei der Eintritt des länglichen Gegenstands in die Durchgangsöffnung vom Lasersensor zum Initiieren einer Messung der Messeinheit an die Steuerung signalisierbar ist.

5. Messvorrichtung nach einem der vorangehenden Ansprüche, wobei der Lasersensor zur Bestimmung eines Aussenprofils des länglichen Gegenstands und/oder zum Bestimmen der Zentrierungsgenauigkeit des länglichen Gegenstands in Bezug auf die Längsachse der Durchgangsöffnung mittels der Antriebseinheit mit der Soll-Winkelgeschwindigkeit auf der ersten Ringschiene oder auf einer zweiten, zur ersten Ringschiene parallelen Ringschiene der ringförmigen Trageinheit eigenständig mit der Soll-Winkelgeschwindigkeit oder einer unterschiedlichen Winkelgeschwindigkeit verfahrbar ist, wobei im Falle der Bestimmung der Zentrierungsgenauigkeit ein Wert der Zentrierungsgenauigkeit an die Recheneinheit zur allfälligen Berücksichtigung bei einer Berechnung des Parameters des länglichen Gegenstands übertragbar ist.

6. Messvorrichtung nach einem der vorangehenden Ansprüche, wobei zu einer zentrierten Führung des länglichen Gegenstands in die Durchgangsöffnung und zur Stützung des länglichen Gegenstands eine Zentrierungsvorrichtung (8) vorgesehen ist, welche mindestens zwei, insbesondere vier, zur Längsachse der Durchgangsöffnung äquidistante Schlittenelemente (8a) an der Eingangsseite der Durchgangsöffnung umfasst, welche Schlitten (8b) umfassen, die in Radialrichtung (y) bezogen auf die Längsachse (x) der Durchgangsöffnung zur Kontaktierung des ankommenden länglichen Gegenstands hin und her (y1) verschiebbar sind, so dass sie an unterschiedlichen Aussenprofilen anpassbar sind, insbesondere wobei die Schlitten eine in Radialrichtung wirkende Federung (8c) umfassen.

7. Messvorrichtung nach Anspruch 6, wobei die Zentrierungsvorrichtung weiter ein Schutzrohr (11) für eine Erhöhung der Stabilität der Zentrierungsvorrichtung (8) umfasst, welches sich durch die Durchgangsöffnung erstreckt, wobei das Schutzrohr Aussparungen aufweist, durch welche jeweils einer der Schlitten von ausserhalb des Schutzrohrs in dieses hineinragen kann.

8. Messvorrichtung nach einem der vorangehenden Ansprüche, wobei die Datenübertragungseinheit als kapazitive Datenübertragung ausgestaltet ist, insbesondere wobei die Datenübertragungseinheit und die Stromversorgungseinheit in einem Bauteil als hybride Drehkupplung zusammengefasst sind.

9. Messvorrichtung nach einem der vorangehenden Ansprüche, wobei die Stromversorgungseinheit (6) eine elektrisch leitende und mit einer externen Netzversorgung gekoppelte ringförmige Stromversorgungsschiene für die Stromversorgung umfasst, wobei die Stromversorgung mit Schleifkontakten, insbesondere einem Schleifring, zum Abgreifen des Stroms von der Stromversorgungsschiene für die Versorgung der Messeinheit, der Antriebseinheit, der Steuerung und der Datenübertragungseinheit mit Strom versehen ist.

10. Messvorrichtung nach einem der vorangehenden Ansprüche, wobei mindestens die Messeinheit, die Trageinheit und die Stromversorgung als Baugruppe (7) derart zusammengefasst sind, dass die Baugruppe in einem Stück aus dem Gehäuse herausnehmbar und darin wieder einsetzbar ist, insbesondere wobei die Messvorrichtung Positionierungsmittel (1c) umfasst, so dass die Baugruppe innerhalb des Gehäuses höhen- und/oder seitenverstellbar ist.

11. Messverfahren zum Betrieb der Messvorrichtung nach einem der vorangehenden Ansprüche, wobei das Messverfahren folgende Schritte umfasst:
Schritt a): Detektieren des Eintritts des länglichen Gegenstands in die Durchgangsöffnung,
Schritt b): Beschleunigen der Messeinheit auf die Soll-Winkelgeschwindigkeit mittels der Antriebseinheit,
Schritt c): Starten eines Messvorgangs mittels der Steuerung sobald die Messeinheit die Soll-Winkelgeschwindigkeit erreicht hat, indem die Messeinheit das erste THz-Signal in Richtung des länglichen Gegenstands kontinuierlich aussendet,
Schritt d): kontinuierliches Drehen der Messeinheit mittels der Antriebseinheit mit der Soll-Winkelgeschwindigkeit während eines Vorschubs des länglichen Gegenstands durch die Durchgangsöffnung,
Schritt e): Empfangen mittels der Messeinheit des von einem Element des länglichen Gegenstands reflektierten zweiten THz-Signals,
Schritt f): Mischen des ersten THz-Signals mit dem reflektierten zweiten THz Signal und Übertragen eines so gemischten Signals des Messvorgangs an die Recheneinheit,
Schritt g): Berechnen aus dem gemischten Signal ein Laufzeitunterschied zwischen dem ersten und dem zweiten Signal und Herleiten des mindestens einen Parameters selbst und optional des mindestens einen vom Parameter abgeleiteten Werts und Ausgeben des Messergebnisses.

12. Messverfahren nach Anspruch 11, wobei das erste THz-Signal aus einem Frequenzbereich zwischen 0.003 THZ und 3 THz, bevorzugt zwischen 0.1 THz und 0.2 THz, ausgewählt wird, besonders bevorzugt eine Mittenfrequenz von 0.15 THz beträgt, und wobei das erste THz-Signal die Form einer linear modulierten Frequenzrampe hat.

13. Messverfahren nach Anspruch 11 oder 12, wobei als Parameter ein Abstand d einer Trennfläche zwischen zwei verschiedenen Materialien des länglichen Gegenstands vom Sensorkopf mittels der Recheneinheit berechnet wird, wobei sich der Abstand gemäss der nachfolgenden Formel (I) ergibt: $d = \frac{c}{2 n} τ = \frac{{cf}_{b} {T}_{sweep}}{2 nB} = {δ}_{r} {f}_{b} {T}_{sweep}$ (I) wobei
c die Lichtgeschwindigkeit ist,
n der Brechungsindex des Materials, an dem das erste THz-Signal reflektiert wird, ist,
*T_{sweep}* die Dauer der Frequenzrampe ist,
τ die zeitliche Verschiebung zwischen dem ersten und dem zweiten THz-Signal ist,
*f_{b}* die Schwebefrequenz der Überlagerung des ersten und des zweiten THz-Signals ist, und
*δᵣ* eine Tiefenauflösung der Messeinheit ist,
*B* die Modulationsbandbreite ist, insbesondere wobei die Modulationsbandbreite mindestens 20 GHz, bevorzugt 45 GHz oder mehr beträgt,
und/oder wobei als Parameter eine Materialbeschaffenheit eines metallischen oder dielektrischen Elements des länglichen Gegenstands, insbesondere eine Materialbeschaffenheit der Wandung des mindestens einen Innenrohrs der wärmegedämmten Leitung, berechnet wird.

14. Messverfahren nach einem der Ansprüche 11 bis 13, wobei, wenn als länglicher Gegenstand ein wärmegedämmtes Leitungsrohr gemessen wird, der vom Parameter abgeleitete Wert ausgewählt wird aus den nachfolgenden Grössen:
- Lage des mindestens einen Innenrohrs im Aussenrohr bezogen auf die Längsachse der Aussenrohrs;
- Abweichung der Lage des mindestens einen Innenrohrs von einer Soll-Lage;
- bei mehreren Innenrohren, Abstand zweier beliebiger, insbesondere zweier gegenüberliegenden, Innenrohre voneinander;
- maximaler Aussendurchmesser der Isolationsschicht;
- Dicke des Innenrohrs, und
- Materialbeschaffenheit eines metallischen oder dielektrischen Elements des Leitungsrohrs.

15. Messverfahren nach einem der Ansprüche 11 bis 14, wobei nach dem Schritt a) ein kombinierter Schritt x) durchgeführt wird, bei dem zunächst eine Zentrierungsgenauigkeit des länglichen Gegenstands in Bezug auf die Längsachse der Durchgangsöffnung bestimmt und als Wert ein Zentrierungsoffset ausgegeben wird, welcher einem radialen Versatz der Längsachse des länglichen Gegenstands von der Längsachse der Durchgangsöffnung entspricht und anschliessend der Zentrierungsoffset an die Recheneinheit zur allfälligen Berücksichtigung bei der Berechnung des Parameters des länglichen Gegenstands übertragen wird, wenn der Parameter ein positionsbedingter Parameter ist, insbesondere wobei ein maximal zulässiger Zentrierungsoffset in Abhängigkeit von einer vorgegebenen Messgenauigkeit in einem Bereich zwischen 5% und 10% des Durchmessers der Durchgangsöffnung festgelegt wird.

16. Messverfahren nach Anspruch 15, wobei die Zentrierungsgenauigkeit in Abhängigkeit von einer Konfiguration der Leitung entweder mittels eines Lasersensors oder mittels der Messeinheit selbst durchgeführt wird, und zwar:
i) mittels des Lasersensors und/oder der Messeinheit, wenn der längliche Gegenstand die Isolationsschicht und das mindestens eine Innenrohr und insbesondere kein Aussenrohr aufweist, oder
ii) mittels der Messeinheit selbst, wenn der längliche Gegenstand die Isolationsschicht, das mindestens eine Innenrohr und insbesondere ein Aussenrohr aufweist.

17. Messverfahren nach einem der Ansprüche 11 bis 16, wobei die Antriebseinheit mittels der Steuerung so gesteuert wird, dass die Soll-Winkelgeschwindigkeit der Messeinheit in einer vorgegebenen Zeit erreicht ist, wobei die Soll-Winkelgeschwindigkeit in Abhängigkeit von einer Durchlaufgeschwindigkeit durch die Durchgangsöffnung oder einer Produktionsgeschwindigkeit des länglichen Gegenstands und von einem maximal zulässigen Offsetwert zweier konsekutiven Messungen der Messeinheit auf einer selben, zur Längsachse des länglichen Gegenstands parallelen Linie eingestellt oder errechnet wird, insbesondere wobei, wenn der längliche Gegenstand (2) eine wärmegedämmte Leitung mit mindestens einem Innenrohr (2b; 2c) und einer das mindestens eine Innenrohr umgebende Isolationsschicht (2c) ist, der maximal zulässige Offsetwert höchstens 20% eines minimalen Biegeradius eines der in der Wärmedämmung verlaufenden Innenrohre (2b; 2c) beträgt.

18. Produktionsanlage (20) für ein wärmegedämmtes Leitungsrohr als länglicher Gegenstand, welches wärmegedämmte Leitungsrohr mindestens ein Innenrohr (2a; 2b) und eine das mindestens eine Innenrohr umgebende Isolationsschicht (2c) umfasst, wobei die Produktionsanlage nacheinander in Produktionsrichtung umfasst:
eine Abwicklungsstation (21) zum Abwickeln des mindestens einen Innenrohrs von einem Vorratswickel,
eine Folienstation (22) zur Bildung eines Folienschlauchs um das mindestens eine Innenrohr herum und zur Einbringung eines schaumbildenden Ausgangsmaterials in den Folienschlauch, welches schaumbildende Material als Isolationsschicht aushärtet,
mindestens zwei Formbacken (23) zum Einbringen einer Tiefenwellung in die ausgehärtete Isolationsschicht,
wobei die Produktionsanlage weiter eine Messvorrichtung (1) nach einem der Ansprüche 1 bis 11 umfasst, welche zum Messen des Parameters mit dem Messverfahren nach einem der Ansprüche 11 bis 17 betrieben wird und in Produktionsrichtung gesehen entweder vor oder nach den Formbacken angeordnet ist.

19. Produktionsanlage nach Anspruch 18, weiter umfassend einen Extruder (24) zum Extrudieren eines Aussenrohrs auf die Isolationsschicht,
wobei die Messvorrichtung in Produktionsrichtung vor oder nach dem Extruder angeordnet ist.

20. Produktionsanlage nach Anspruch 18 oder 19, weiter umfassend eine Hauptsteuerung (25), wobei die Hauptsteuerung derart ausgestaltet ist, dass sie der Steuerung der Messvorrichtung ein Metrierungssignal schickt, welches die Länge der bereits bearbeiteten oder produzierten Leitung beschreibt, wobei das Metrierungssignal dem jeweiligen Messergebnis der Messvorrichtung zuordenbar und als Wertepaar speicherbar ist, derart, dass die Messergebnisse für die fertige Leitung zu einem späteren Zeitpunkt abrufbar sind.

21. Produktionsanlage nach Anspruch 20, wobei die Hauptsteuerung derart ausgestaltet ist, dass sie beim Schritt g) des Messverfahrens das Messergebnis von der Datenübertragungseinheit der Messvorrichtung empfängt, eine Auswertung des Messergebnisses durchführt und, wenn nötig, geeignete Korrekturmassnahmen durchführt, insbesondere wobei die Auswertung und die Durchführung der Korrekturmassnahmen automatisch erfolgen.
